Europäisches Patentamt

European Patent Office

Office européen des brevets

(19)

(11) EP 1 482 726 A1

(12) EUROPEAN PATENT APPLICATION

(43) Date of publication:
01.12.2004 Bulletin 2004/49

(51) Int Cl.⁷: **H04N 5/14**

(21) Application number: 03012380.6

(22) Date of filing: 30.05.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Sony International (Europe) GmbH
10785 Berlin (DE)**

(72) Inventors:
• **Lei, Zhichun, c/o Stuttgart Technology Center
70327 Stuttgart (DE)**

• **Dilly, Altfried, c/o Stuttgart Technology Center
70327 Stuttgart (DE)**
• **Wagner, Peter, c/o Stuttgart Technology Center
70327 Stuttgart (DE)**
• **Scholz, Alexander,
c/o Stuttgart Technology Center
70327 Stuttgart (DE)**

(74) Representative: **Müller - Hoffmann & Partner
Patentanwälte,
Innere Wiener Strasse 17
81667 München (DE)**

(54) **Method of and apparatus for processing a sequence of images**

(57)    The present invention relates to a method of processing a sequence of images as well as to a corresponding apparatus and a corresponding computer program product. In particular, the present invention relates to a method, apparatus or computer program product for processing a sequence of images, wherein a temporally recursive filter or a coring filter is employed to smooth a processing parameter so as to obtain an adapted processing parameter useful for inhibiting the generation of flicker as well as perceptible discontinuities during the processing of the image sequence.

Fig. 3A

**(Cont. next page)**

Fig. 3B

## EP 1 482 726 A1

**Description**

**BACKGROUND OF THE INVENTION**

**Field of the invention**

The present invention relates to a method of processing a sequence of images as well as to a corresponding apparatus and a corresponding computer program product. In particular, the present invention relates to a method, apparatus or computer program product for processing a sequence of images, wherein a temporally recursive filter or a coring filter is employed to smooth a processing parameter so as to obtain an adapted processing parameter useful for inhibiting the generation of flicker as well as perceptible discontinuities during the processing of the image sequence.

**Description of the related prior art**

Numerous methods of image processing are known that can be applied to either an individual image or to a sequence of image. Such methods include, but are not limited to, contrast enhancement, image sharpening, morphing, noise removal, edge detection, color enhancement and pedestal processing.

When applied to a sequence of images, inappropriate image processing can lead to flicker and/or perceptible discontinuities in the image sequence. Such flicker is not to be confused with the flicker of the same name inherent to interlaced TV signals below roughly 70 Hz.

A common method of avoiding flicker or perceptible discontinuities is to reduce a ratio at which a processed image is mixed with the original image prior to visual presentation. Due to the moderate amount of processing, *e.g.* contrast enhancement, in the image as a whole, the human visual system does not perceive any flicker or discontinuities. Unfortunately, a reduction of the effective total amount of processing to the image brings about a proportionate reduction in performance.

U.S. Patent 5,808,697 discloses a video contrast enhancer that enhances luminance contrast by dividing each video frame or field into blocks, calculating a mean luminance level for each block, selecting mapping functions on the basis of these mean luminance levels over a series of frames or fields, and mapping the video luminance levels according to the selected mapping functions. Color-saturation contrast is enhanced by modifying the amplitude of the modulated chrominance signal by the histogram equalization method, preferably by making a single linear modification in each period of the chrominance signal, so that color phase is not affected. For video signals with non-picture bands, these enhancements are preferably restricted to the picture area. If a black offset is present, it is preferably removed.

According to the aforementioned U.S. patent, the average luminance level of the blocks is used to select the mapping curves for a histogram equalization technique over several frames. By adjusting the selection signal in small steps, the mapping curves preferably only change when the average luminance levels change consistently over a certain number of consecutive frames and flicker can be avoided.

"Video Processing for Multimedia Systems" by Gerard de Haan, University Press Eindhoven, 2000, ISBN 90-9014015-8, the contents of which are incorporated herein by reference, discloses an image processing technique known as pedestal processing that aims at making the darkest part of an image truly black. Pedestal processing can be effected by reducing the luminance of each pixel in an image by a calculated amount, *i.e.* by subtracting a calculated offset from each pixel in the image. This darkening operation can be followed by a stretching operation that stretches the image along the luminance axis to make use of the full dynamic range available.

Pedestal processing is useful e.g. for converting an NTSC standard signal to another transmission standard since the black level of an NTSC standard image is 10% higher than the clamping level. It is likewise useful for removing clamping errors that may have arisen in the long chain from the camera to the display device as well as for eliminating undesired shifts in the black level that may have arisen in the course of image "enhancement" processing, *e.g.* in histogram equalization processing. To achieve this aim, one can estimate the intended level of the darkest part of the image from a cumulative histogram (also called a cumulative distribution function). However, due to disturbances in the images such as noise or quantization error, the estimated level may differ so significantly from field to field that a correspondingly pedestal processed sequence of images appears to flicker or is perceived as discontinuous.

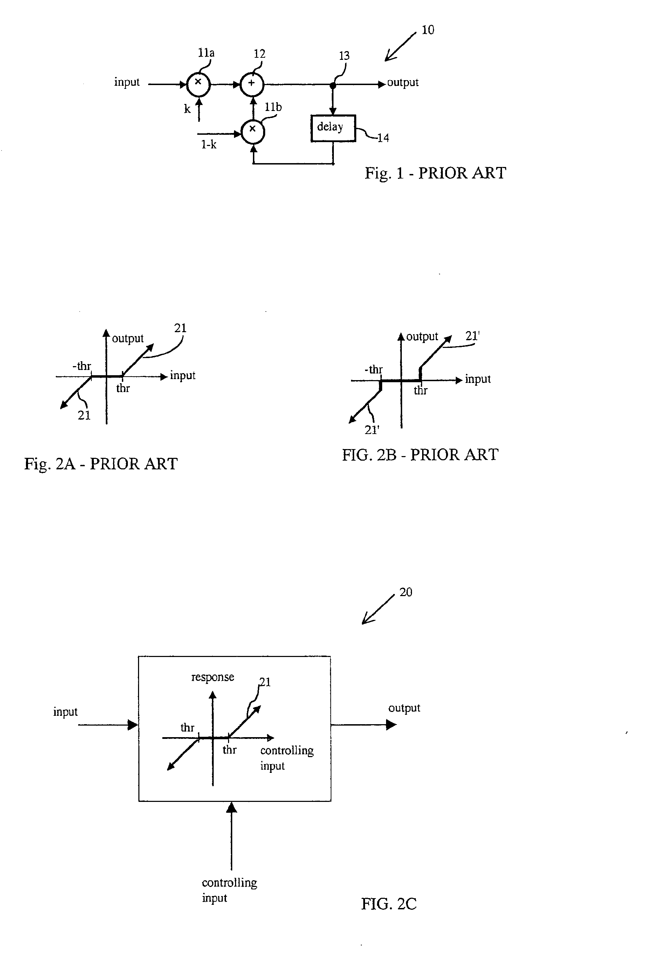

Figure 1 shows an exemplary embodiment of a temporally recursive filter 10 as used in a wide variety of applications *e.g.* for noise reduction in image sequences. The filter illustrated in Figure 1 is a first order temporally recursive filter and comprises two multiplying units 11a and 11b, an adding unit 12, a signal tap 13 and a signal delay 14. An input signal, for instance image data corresponding to a single frame in a sequence of images, is weighted in multiplying unit 11a with a weighting factor k and passed on to the adding unit 12. The adding unit 12 adds a delayed, weighted signal to the input signal and outputs the resultant signal as an output signal. Signal tap 13 creates a feedback signal from the output signal and directs this feedback signal to the signal delay 14. The signal delay stores the feedback signal, *e.g.* in a field memory, for a set amount of time, *e.g.* for one half of the field period of an image sequence, and then outputs the delayed feedback signal to the multiplying unit 11b, where the delayed feedback signal is weighted by a weighting factor, *e.g.* 1-k. The resultant, delayed feedback signal is then added, in the adding unit 12 to a subsequent input signal, thus completing the feedback loop.

The output of such a filter is not only dependent on the current input signal, but also on previous input signals. Consequently, any change in the current input over previous input will be reduced, i.e. the output signal will be smoothed, in accordance with the smoothing, *i.e.* controlling, coefficient of the temporally recursive filter, *i.e.* in accordance with the ratio between weighting of the input signal and weighting of the feedback signal. In the illustrated example, the controlling coefficient k can adopt a value between 0 and 1. The lower the value of k, the stronger the smoothing effect of the temporally recursive filter.

Another technique used in signal processing is the so-called coring technique. Figures 2A and 2B illustrate typical response functions 21, 21' of a coring filter. Typical of the coring technique is that an input having a value below a given threshold value (thr) evokes response of a coring value, *e.g.* zero, and an output corresponding to a given function of the input signal in accordance with the response function 21, 21' for all other values. Coring filters are thus useful for cancelling small amplitude artifacts in the input signal.

The aforementioned image processing technique of histogram equalization (HE) is widely used for image contrast enhancement. In this method, a mapping curve is calculated from a histogram. The histogram can be calculated *e.g.* from the original image, an edge-masked version thereof or both. Histogram equalization based on a histogram calculated from the edge-masked image comprises several advantages over HE based on a histogram calculated from the original images. *Inter alia*, the former method improves contrast and prevents details of the image from being lost. Consequently, the mapping curve underlying histogram equalization is based is preferably calculated from a histogram derived from an edge-masked version of the image to be processed.

However, this technique is disadvantageous in that differences in the respective histograms of consecutive frames, not differences in the images themselves *per se,* lead to corresponding frame-to-frame changes in the mapping curve. Significant frame-to-frame changes of this type in the calculated histogram are called "histogram discontinuities."

Thus, even if the contents of consecutive frames change only slightly or in a humanly imperceptible manner, differences in their respective histograms may easily result in significant frame-to-frame changes in the mapping curves used for equalization and, correspondingly, in the equalized image, i.e. in the images subjected to an equalization processing operation based on those differing mapping curves. In the event of such frame-to-frame changes in the processed images, the associated sequence of images may exhibit flicker and/or perceptible discontinuities depending on the ratio with which processed image data is mixed with original data during calculation of the final, i.e. displayed, image, even if the original image sequence does not exhibit any flicker and/or perceptible discontinuities.

As is apparent from the remarks above, histogram equalization based on histograms calculated from edge-masked images is particularly prone to inducing visual artifacts such as flicker and/or perceptible discontinuities due to the problem of so-called "histogram discontinuities."

Unpublished European patent application number 02 004 428.5, the contents of which are incorporated herein by reference, filed on February 26, 2002 in the name of the same applicant as the present application and entitled "Contrast Enhancement for Digital Images," discloses a histogram equalization technique that yield excellent equalization, yet that is not impervious to the extraneous generation of visual artifacts such as flicker and/or perceptible discontinuities.

In view of the aforementioned deficiencies of the prior art, it is an object of the invention to provide an improved method of and apparatus for processing a sequence of images. It is moreover an object of the invention to provide a method of and apparatus for the processing of a sequence of images that inhibits the creation of undesirable artifacts during said image processing such as flicker and/or perceptible discontinuities in the sequence of images.

It is likewise an object of the invention to provide a method of and apparatus that is particularly adept at inhibiting the creation of undesirable artifacts in conjunction with pedestal processing or histogram equalization.

It is moreover an object of the invention to provide image processing that does not require a complex selection scheme as is the case in the method disclosed in U.S. Patent 5,808,697 and that is particularly effective, not only in the case of local histogram equalization, but also for global histogram equalization.

## SUMMARY OF THE INVENTION

In its broadest aspect, the invention can be seen in a method of processing a sequence of images comprising the steps of adapting a processing parameter with regard to one or more visually perceptible image parameters of one or more sets of said images to obtain an adapted processing parameter and processing a set of one or more of said images including a current image, said processing including a processing step based on the adapted processing parameter. The invention can be likewise seen in a corresponding apparatus or a corresponding computer program product.

In such an embodiment of the invention, the employment of a processing parameter that has been adapted with regard to one or more visually perceptible image parameters provides the invention with an "awareness" of image parameters perceivable by an image observer. Consequently, the method / apparatus of the invention can regulate processing such that flicker and/or perceptible discontinuities do not arise or are significantly inhibited.

Preferably, the one or more visually perceptible image parameters includes one or more average picture levels obtained from a respective set of one or more images of the sequence. In particular, the processing parameter is preferably adapted based on a difference between the respective average picture levels of two temporally distinct sets of images of the sequence.

The average picture level of an image is comparatively simple to calculate and is a parameter to which human visual perception is rather sensitive. Derivations of the average picture level, *e.g.* the difference between the average picture level of two different images, are useful for capturing the relationship of the average picture level to other image parameters, *e.g.* changes of the image in the time domain. The average picture level and its derivations are consequently an advantageous parameter for use in the method / apparatus of the invention.

In accordance with the invention, an average picture level obtained from a set of images can be, for example, the average picture level of one image or an average picture level calculated as an average value, as a mean value or in any other suitable fashion from several images constituting the set.

In the context of the present invention, the term "temporally distinct sets of images of the sequence" designates sets whose content differs with respect to its placement in the sequence of images. That is to say, a set comprising at least one image, *e.g.* frame or field, of the sequence that is not comprised by another set, is temporally distinct from that other set. In the context of the present invention, the concept of temporally distinct images is separate from the concept of spatially distinct images, *i.e.* images whose (pixel) content is different, *e.g.* due to processing of one image *vis-à-vis* another, original / unprocessed image.

In any of the described techniques of the invention, it is advantageous if the processing parameter is adapted with regard to a change in a visually perceptible image parameter between two sets of images, the sets each consisting of a respective one of the two images immediately previous to the current image in the sequence.

Preferably, the adapting of the processing parameter comprises the application of a temporally recursive filter to the processing parameter.

Temporally recursive filters (cf. Fig. 1 and its corresponding description hereinabove) are a simple-to-implement, yet effective means for smoothing, over time, a signal input thereto. Moreover, the degree of smoothing can be readily adapted, in real time, by varying the ratio of the input signal to the feedback, *i.e.* recursive, signal. In this specification and the associated claims, this ratio is designated as the "controlling coefficient" of the temporally recursive filter. By smoothing, by means of a temporally recursive filter, an appropriately chosen processing parameter, the processing itself can be smoothed and the generation of flicker and/or perceptible discontinuities during the processing operation can be inhibited.

Temporally recursive filters are also advantageous in their ability to alter the signal input thereto in a stepless, infinitely variable manner.

The temporal recursive filter of the invention may be of any degree, *i.e.* a first, second, third or higher degree temporally recursive filter may be used. The person skilled in the art is aware of the advantages and disadvantages of higher / lower order filters, respectively, and will know how to choose an appropriate filter for the invention described herein in view of the image processing requirements of the given circumstances. A first degree filter is advantageous in that it is less costly to implement.

Advantageously, a controlling coefficient of the temporally recursive filter is adapted based on a difference between a first average picture level determined from a first set of images and a second average picture level determined from a second set of images distinct from the first set.

As noted above, the average picture level is not particularly prone to disturbances. Besides, the average picture level of an image is comparatively simple to calculate and is a parameter to which human visual perception is rather sensitive. Derivations of the average picture level, *e.g.* the difference between the average picture level of two temporally distinct image sets, are useful for capturing the relationship of the average picture level to other image parameters, *e.g.* changes of the image in the time domain.

Consequently, the average picture level and its derivatives are an appropriate choice or measure for the controlling coefficient of a temporally recursive filter to be applied in the course of obtaining a processing parameter suitably adapted for inhibiting the creation of undesirable artifacts during image processing such as flicker and/or perceptible discontinuities.

Preferably, a look-up table is employed for choosing a controlling coefficient. Accordingly, a difference between a current average picture level and a prior average picture level can be suitably employed as an input to the look-up table.

By selecting, rather than calculating, an output value in accordance with data input thereto, a look-up table can be useful in reducing computational load, *e.g.* in reducing the computational processing necessary to determine a suitable controlling coefficient. The controlling coefficients contained in the look-up table may be empirical values, *i.*

*e.* controlling coefficients that have been determined, by experiment, to be advantageous for a particular average picture level, change in the average picture level, derivative thereof, etc.

Preferably, all images of the first set are previous to the current image in the sequence and all images of the second set are previous and not adjacent to the current image in the sequence.

By basing an adaptation of the processing parameter on the basis of which (at least) a current image is processed exclusively on previous images of the sequence, system complexity can be reduced, particularly in the case of streamed input. Moreover, adaptation of a processing parameter on the basis of two temporally distinct sets of images in the sequence provides the invention with an "awareness" of time-dependent parameters of the image sequence. Consequently, the method / apparatus of the invention can regulate processing such that temporal irregularities such as flicker and/or perceptible discontinuities do not arise or are significantly inhibited.

Advantageously, the adapting of the processing parameter comprises the application of a coring filter to the processing parameter.

So-called coring filters (cf. Fig. 2A and 2B and their corresponding descriptions hereinabove) provide unaltered output in response to controlling input signals below a predetermined threshold, *i.e.* provide a simple-to-implement, yet effective means for disregarding control signals of insignificant value / amplitude. It follows that sensible application of a coring filter to a processing parameter provides a means for influencing the processing parameter when, and only when, an appropriately chosen control parameter attains a significant level. That is to say, the processing parameter can be adapted in a manner such that only significant occurrences with regard to the chosen, controlling image parameter evoke a correspondingly strong processing operation. Consequently, coring techniques are suitable for inhibiting extraneous flicker and/or perceptible discontinuities in an image processed sequence of images.

In accordance with the invention, both the transfer function of the coring function and the threshold of the coring function are preferably empirically determined and fixed.

In accordance with the invention, a difference between an average picture level determined from a third set of images of the sequence and an average picture level determined from a fourth set of images of the sequence that is distinct from the third set is preferably employed as a controlling input to the coring filter.

Abrupt changes in the amount of image processing between consecutive or roughly consecutive images, where not in synch with correspondingly significant changes in the respective image scenes, is often readily perceptible by the human visual system. Moreover, as noted above, the average picture level of an image is comparatively simple to calculate and is a parameter to which human visual perception is rather sensitive. Derivations of the average picture level, *e.g.* the difference between the average picture level of two different images, are useful for capturing the relationship of the average picture level to other image parameters, *e.g.* changes of the image in the time domain. By employing a difference in average picture level as a controlling input to a coring filter via which a processing parameter is adapted, a resultant processing parameter can be obtained that allows the processing operation to respond effectively to significant changes in the average picture level.

In accordance with the invention, the difference in average picture level may be calculated *e.g.* between image sets comprising at least a respective one of two consecutive or roughly consecutive images, thus allowing the processing operation to respond effectively to significant changes in the average picture level as regards *e.g.* the current image and its (near) predecessor. Likewise, response, i.e. the amount of processing in the resultant image, can be toned down in the case of insignificant changes in the average picture level.

Calculation of the difference in average picture level between sequential images or nearly sequential images of the image sequence rather than images distant from one another in the sequence reduces the overall complexity of the system.

Preferably, all images of the third set are previous to the current image in the sequence and all images of the fourth set are previous and not adjacent to the current image in the sequence.

As noted above, by basing an adaptation of the processing parameter on the basis of which (at least) a current image is processed exclusively on previous images of the sequence, system complexity can be reduced, particularly in the case of streamed input. Moreover, adaptation of a processing parameter on the basis of two temporally distinct sets of images in the sequence provides the invention with an "awareness" of time-dependent parameters of the image sequence. Consequently, the method / apparatus of the invention can regulate processing such that temporal irregularities such as flicker and/or perceptible discontinuities do not arise or are significantly inhibited.

The present invention is of particular utility if the processing step comprises histogram equalization or pedestal processing.

As noted with regard to the background art above, histogram equalization, in particular when based on histograms derived from an edge-masked image, is susceptible to incurring visual artifacts such as flicker and/or perceptible discontinuities when applied to a sequence of images. Consequently, the aforementioned features of the invention are particularly advantageous in combination with a processing step comprising histogram equalization. These remarks also hold for pedestal processing *mutatis mutandis*.

In the case of histogram equalization, particularly effective image processing can be achieved in conjunction with histogram equalization based on a mapping curve that is calculated from one or more histograms that have been subjected to frequency domain low pass filtering, recursive low pass filtering, cascaded low pass filtering or zero-phase forward and backward low pass filtering. Such techniques are the subject of unpublished European patent application number 02 004 428.5, which is noted above as disclosing histogram equalization techniques that yield excellent equalization. The combination of those techniques with the further features of the present invention thus leads to a highly advantageous configuration. Moreover, particularly effective image processing can be achieved in conjunction with histogram equalization based on a mapping curve that has been calculated using average picture level adaptation, in particular a mapping curve based on a histogram that has been subjected to average picture level adaptation.

Likewise, in the case of histogram equalization, it is advantageous if the processing parameter comprises any one of a cumulative distribution function determined from one or more of the images of the sequence, a histogram of an image of the sequence, a histogram equalization curve obtained on the basis of one or more of the images of the sequence, a degree to which processed image data is to be mixed to unprocessed image data, or pixels associated with one or more of the images of the sequence. In this manner, a cumulative distribution function, a histogram, etc. or a sequence thereof can be "smoothed" so as to be "in synch" with visually perceptible frame and/or scene changes in an image sequence. This "smoothed" image / image sequence data can be employed to regulate the processing operation such that the processed sequence of images is likewise "in synch" with visually perceptible frame and/or scene changes in the original image sequence.

In the preceding paragraph, the one or more images, image or image data preferably comprises the current image / data associated the current image so as to establish a direct relationship between the processing parameter and the image being processed.

Moreover, in the case of pedestal processing, it is advantageous if the processing parameter comprises a degree of change of a black level of an image. In this manner, the degree of adjustment to the black level, *i.e.* the luminance of the darkest pixels, of a respective image can be adapted to be "in synch" with visually perceptible frame and/or scene changes in an image sequence.

Preferably, the processing parameter comprises a difference between an average picture level determined from a set of images of the sequence and an average picture level determined from pre-processed versions of the images of that set. That is to say, the processing parameter may be a difference between spatially distinct image sets, *i.e.* a difference between particular image information of a set of images before and after pre-processing.

Recapping the aforementioned preferred features of the invention and their advantages, it is noted that, in a several preferred embodiments of the invention, specific characteristics of the average picture level and of temporally recursive filters are exploited to combat the problems associated with conventional image sequence processing techniques as regards flicker and other perceptible discontinuities.

In a smooth image sequence, the average picture level does not change abruptly, *i.e.* significant changes in the average picture level (APL) only occur together with scene changes. By linking, *i.e.* adapting, the controlling coefficient of a temporally recursive filter to changes in the average picture level *e.g.* of the current frame or selected recent frames of an image sequence *vis-à-vis* a corresponding previous frame or set of frames, in particular changes in the APL between two consecutive frames, the output of the temporally recursive filter can be made smoother when the image sequence is smooth, while allowing abrupt changes in the output of the temporally recursive filter *e.g.* when scene changes occur. That is to say, the controlling coefficient is preferably increased (resulting in more input signal to less feedback -> less smoothing) as changes in the average picture level increase, and the controlling coefficient is preferably decreased (resulting in less input signal to more feedback -> more smoothing) as changes in the average picture level decrease.

Since the output of a temporally recursive filter depends not only on the current input, but also on previous input, changes between the current input and previous input are reduced and the output is smoothed. By adaptively controlling the temporally recursive filter, the amount of smoothing can be likewise controlled.

If a temporally recursive filter controlled in this manner is applied for smoothing *e.g.* a mapping curve for histogram equalization or an estimated black level for pedestal processing, the output data, *i.e.* the output mapping curve or the output estimated black level, will be remain the same or change only slightly if the average picture level does not change significantly or only changes slightly, and the change will be very smooth due to the property of the temporally recursive filter. In other words, a histogram or a black level from the current frame image can be smoothed with those of previous frame images for overcoming *e.g.* histogram discontinuities.

It follows that an adaptive temporally recursive filter, *e.g.* a temporally recursive filter that is adapted to a difference in an average picture level e.g. of two consecutive fields is useful in overcoming the aforementioned problem of histogram discontinuities. For practical implementation, the relationship between the APL difference and the temporally recursive filter coefficient can be stored in a look-up table.

In lieu of or in addition to a temporally recursive filter, one can likewise use a coring filter to combat discontinuities such as those leading to flicker and other perceptible discontinuities. Moreover, a coring filter is simpler to implement than a temporally recursive filter.

A coring filter as preferably employed by the present invention comprises an input, a controlling input and an output. The response of the coring filter is characterized by a threshold and a response function. If the value of the controlling input is below the threshold (or, in the case of a bi-directional response function, below a positive threshold and above a negative threshold), the coring filter alters the input by a coring value of zero, *i.e.* responds with an output identical to the input. If the value of the controlling input is above the threshold, the coring filter alters the input in accordance with the response function, *i.e.* responds with an output equal to the input plus the response function times the input. This can be expressed mathematically as:

$$Output = Input + (Input \cdot Response\_Function(Controlling\_Input))$$

where Response_Function is *e.g.* as shown in Fig. 2A or 2B having a value of zero below a predetermined threshold.
Naturally, any coring filter as known in the art may be employed by the invention.

**BRIEF DESCRIPTION OF THE DRAWINGS**

The novel features of the invention, as well as the invention itself, both as to its structure and its operation will be best understood from the accompanying figures, taken in conjunction with the accompanying description. The Figures show:

Fig. 1      a conventional temporally recursive filter;
Fig. 2A     a conventional coring technique in accordance with a first alternative;
Fig. 2B     a conventional coring technique in accordance with a second alternative;
Fig. 2C     a preferred embodiment of a coring filter in accordance with the invention;
Fig. 3A     a first preferred embodiment of the invention employing a temporally recursive filter;
Fig. 3B     a second preferred embodiment of the invention employing a coring filter;
Fig. 4A     a third preferred embodiment of the invention; and
Fig. 4B     a fourth preferred embodiment of the invention.

**DESCRIPTION OF THE PREFERRED EMBODIMENTS**

Figure 2C schematically illustrates a preferred embodiment of a coring filter 20 in accordance with the invention.
As noted above, coring filter 20 preferably employed by the invention employs a response function 21 that characterizes a relative alteration that coring filter 20 effects upon an input signal in response to a controlling input. Referring to Fig. 2C, a controlling input having a value below a given threshold value (thr) evokes a response of a coring value, *e.g.* zero, *i.e.* results in an output identical to the input. All other values for the controlling input evoke a response in accordance with the non-trivial segments of response function 21, i.e. results in a relative change of the input function in proportion with response function 21.

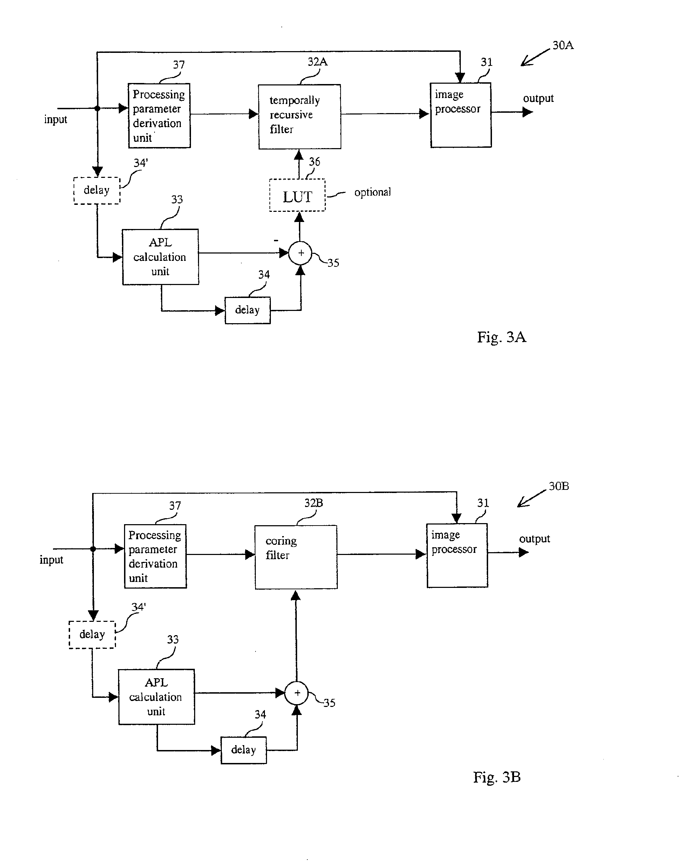

Figure 3A schematically depicts an apparatus 30A for processing a sequence of images in accordance with a preferred first embodiment of the invention comprising an image processor 31, a temporally recursive filter 32A, an average picture level (APL) calculation unit 33, a signal delay unit 34, an adding unit 35, an optional look-up table 36, a processing parameter derivation unit 37 as well as an optional delay 34'.
Operation of apparatus 30A can be summarized as follows. An input signal, *e.g.* image data, is directed to image processor 31, processing parameter derivation unit 37 and APL calculation unit 33. Input of the input signal to APL calculation unit 33 may optionally be delayed for a predetermined period of time, *e.g.* for the period of time between consecutive frames in the image sequence, by delay 34'. APL calculation unit 33 calculates an average picture level from the input signal including, as the case may be, previous input data and outputs a calculated APL signal to both delay unit 34 and a first input of adding unit 35. Delay unit 34 delays the calculated APL signal for a predetermined period of time, *e.g.* for the period of time between consecutive frames in the image sequence, and outputs a correspondingly delayed APL signal to a second input of adding unit 35. By inverting the sign of the signal input to its first input, adding unit 35 subtracts the calculated APL signal from the delayed APL signal to obtain an APL difference signal that is output to look-up table 36. Look-up table 36 selects an appropriate look-up value based on the APL difference signal input thereto and supplies the look-up value to temporally recursive filter 32A for use as a controlling coefficient therein. Look-up table 36 is a purely optional feature of this embodiment. In absence of look-up table 36, the APL difference signal may be supplied directly to temporally recursive filter 32A for use as a controlling coefficient therein.
Processing parameter derivation unit 37 derives a processing parameter from the input signal directed thereto.

In the case of an input signal comprising image data, for instance, processing parameter derivation unit 37 could determine a black level, a histogram, a cumulative distribution function, a histogram equalization mapping curve for the current frame image, or a mixing level at which a processed image data should be mixed to original image data. In an extreme case, processing parameter derivation unit 37 could do no processing and simply output the input signal in unmodified form. Such a case, however, would constitute no refinement of the input signal and could thus burden the subsequent processing units with an unduly high computational load.

The processing parameter output from processing parameter derivation unit 37 is directed to temporally recursive filter 32A, where it is smoothed in accordance with the current value of the controlling coefficient as described in detail above, *inter alia* with reference to Figure 1. The smoothed processing parameter is directed to image processor 31, where it constitutes a processing parameter in the processing of the original input signal for generating the output signal of the apparatus as a whole.

Preferably, the input signal is an image, frame or field of an image sequence and processing parameter derivation unit 37 is configured and adapted to derive one of the aforementioned processing parameters, including an unmodified input signal. Image processor 31 is preferably configured and adapted to carry out histogram equalization or pedestal processing.

Histogram discontinuities can be particularly reduced if the input to temporally recursive filter 32A is a calculated histogram, a cumulative distribution function, a HE mapping curve of the current frame image, or a desired mixing amount between a processed image and the original one. Of course, the current input image may be used as an input to temporally recursive filter 32A. However, this results in a high computational load because of the high number of image pixels. A histogram can be calculated from the filtered image, and the histogram can, in turn, serve as a basis for obtaining a refined histogram equalization mapping curve.

As already mentioned, pedestal processing aims to make the darkest pixels in an image truly black. For this purpose, the luminance value in the darkest part of the image is measured so that this measured value can then be removed from dark parts of the image or the entire image, *e.g.* by subtraction. However, this measuring result may be affected by *e.g.* image noise and therefore may be different from frame to frame, even if the true luminance value of the darkest pixels does not change. Consequently, the resulting image sequence may unintentionally appear to flicker or be perceptibly discontinuous. By applying temporally recursive filter 32A *e.g.* to filter the measured black level from the current picture with that from the previous picture or to effect inter-frame smoothing the amount by which a black level is changed, undesired flickering and perceptible discontinuities can be avoided.

Figure 3B schematically depicts an apparatus 30B for processing a sequence of images in accordance with a preferred second embodiment of the invention. Apparatus 30B is analogous in its configuration and operation to the configuration and operation of apparatus 30A described above, but employs a coring filter 32B in place of temporally recursive filter 32A as a simpler means for effecting a smoothing of the processing parameter. Accordingly, the output of adding unit 35 is fed to coring filter 32B as a controlling input thereof. The response function 21 of coring filter 32B can be designed so as to eliminate the necessity of look-up table 36.

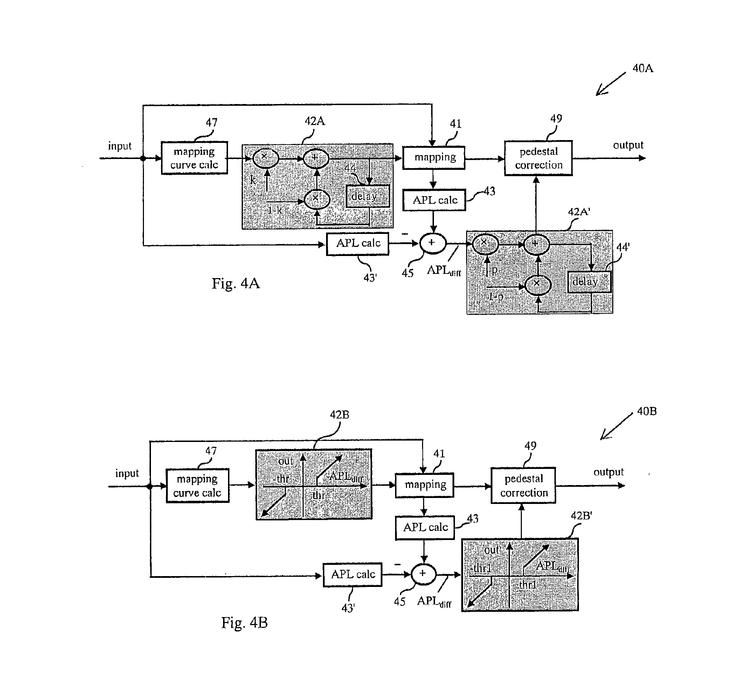

Figure 4A contains a schematic depiction of an apparatus 40A for processing a sequence of images in accordance with a preferred third embodiment of the invention comprising a mapping unit 41, two temporally recursive filters 42A and 42A' comprising respective signal delay units 44 and 44', two APL calculation units 43 and 43', a mapping curve calculation unit 47 and a pedestal correction unit 49. Adding unit 45.

Operation of apparatus 40A can be summarized as follows. An input signal, *e.g.* a sequence of image data, is directed to mapping unit 41, APL calculation unit 43' and mapping curve calculation unit 47. Mapping curve calculation unit 47 calculates a mapping curve, *e.g.* a histogram equalization mapping curve, an outputs the calculated mapping curve to temporally recursive filter 42A. Temporally recursive filter 42A smooths the mapping curve on the basis of a controlling coefficient k in a temporally recursive process as described above, *e.g.* with reference to Fig. 1, employing delay unit 44. Controlling coefficient k is determined with regard to a difference between respective average picture levels of two temporally distinct sets of images as described *e.g.* with reference to Fig. 3A. Accordingly, apparatus 40A will comprise a configuration, not shown, for determining controlling coefficient k analogous to the corresponding configuration of Fig. 3A. Temporally recursive filter 42A outputs the smoothed mapping curve to mapping unit 41 that carries out a mapping, *e.g.* histogram equalization, of the input signal directed thereto on the basis on the smoothed mapping curve.

Assuming that mapping unit 41 carries out some processing of the input signal, the resultant, mapped input signal will typically be spatially distinct from the original, unaltered input signal. Mapping unit 41 outputs the mapped input signal to pedestal correction unit 49 and to APL calculation unit 43. APL calculation unit 43 calculates an average picture level on the basis of the mapped input signal and outputs the calculated average picture level to adding 34', whereas APL calculation unit calculates an average picture level on the basis of an unaltered input signal and likewise outputs the calculated average picture level to adding 34'. Based on these two, spatially distinct inputs, adding 34' determines an APL difference signal in the spatial domain. This APL difference signal is fed to and smoothed by temporally recursive filter 42A' whose configuration and operation is analogous to that of temporally recursive filter 42A.

The smoothed APL difference signal is input to pedestal correction unit 49 as a controlling input, *i.e.* an input determining the degree to which a black level of mapped input signal fed to pedestal correction unit 49 will be altered by pedestal correction unit 49.

Naturally, controlling coefficient p of temporally recursive filter 42A' may be chosen / determined on the basis of different content than that on the basis of which controlling coefficient k is chosen / determined. For example, temporally recursive filters 42A and 42A' may comprise respective look-up tables, not shown, in their respective configurations for determining controlling coefficients k and p. The contents of such look-up tables will typically not be identical.

Figure 4B schematically depicts an apparatus 40B for processing a sequence of images in accordance with a preferred fourth embodiment of the invention. Apparatus 40B is analogous in its configuration and operation to the configuration and operation of apparatus 40A described above, but employs coring filters 42B and 42B' in place of temporally recursive filters 42A and 42A' as a simpler means for effecting a smoothing of the respective processing parameters fed to mapping unit 41 and pedestal correction unit 49. Accordingly, the output of mapping curve calculation unit 47 is fed to coring filter 42B, and the output of adding 34' is fed to coring filter 42B'.

The preferred embodiments described above are preferably implemented as an application specific integrated circuit as known in the art, particularly the art of signal processors, for the sake of improving processing speed and mass manufacturability. Likewise, the preferred embodiments disclosed herein can be implemented in the form of a computer program product as known in the art, *e.g.* the arts of digital signal processing and computer programming.

While the preferred and alternative embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely indicative of a preference and is not to be interpreted as limiting. Except where the contrary is explicitly noted, the plural may be replaced by the singular and vice-versa.

**SUMMARY OF THE PREFERRED FEATURES OF THE INVENTION**

1. A method of processing a sequence of images comprising the steps of:

adapting a processing parameter with regard to one or more visually perceptible image parameters of one or more sets of said images to obtain an adapted processing parameter; and
processing a set of one or more of said images including a current image, said processing including a processing step based on said adapted processing parameter.

2. The method of item 1, wherein said one or more visually perceptible image parameters includes one or more average picture levels obtained from respective sets of one or more of said images.

3. The method of item 1 or 2, wherein said adapting of said processing parameter comprises temporally recursive filtering thereof.

4. The method of item 3, wherein said adapting of said processing parameter comprises adapting a controlling coefficient of said temporally recursive filtering based on a difference between a first average picture level determined from a first set of said images and a second average picture level determined from a second set of said images distinct from said first set.

5. The method of item 4, wherein a look-up table is employed for choosing said controlling coefficient on the basis of said difference between said first average picture level and said second average picture level.

6. The method of item 4 or 5, wherein all images of said first set are previous to said current image in said sequence and all images of said second set are previous and not adjacent to said current image in said sequence.

7. The method of any of the preceding items, wherein said adapting of said processing parameter comprises coring filtering thereof.

8. The method of item 6, wherein said adapting of said processing parameter comprises applying, as a controlling input of said coring filtering, a difference between a third average picture level determined from a third set of said images and a fourth average picture level determined from a fourth set of said images distinct from said third set.

9. The method of item 8, wherein all images of said third set are previous to said current image in said sequence and all images of said fourth set are previous and not adjacent to said current image in said sequence.

10. The method of any of the preceding items, wherein said processing step comprises histogram equalization.

11. The method of any of the preceding items, wherein said processing step comprises pedestal processing.

12. The method of item 10, wherein said processing parameter for said histogram equalization comprises a mapping curve calculated from one or more histograms that have been subjected to frequency domain low pass filtering, recursive low pass filtering, cascaded low pass filtering, zero-phase forward and backward low pass filtering or average picture level adaptation.

13. The method of item 10 or 12, wherein said processing parameter comprises any one of:

- a cumulative distribution function determined from one or more of said images,
- a histogram of an image, in particular a histogram of said current image,
- a histogram equalization curve, in particular a histogram equalization curve associated with said current image,
- a degree to which processed image data is to be mixed to unprocessed image data, or
- pixels associated with one or more of said images.

14. The method of item 11, wherein said processing parameter comprises a degree of change to an image black level.

15. The method of any of the preceding items, wherein said processing parameter comprises a difference between a fifth average picture level determined from a fifth set of said images and a sixth average picture level determined from pre-processed versions of the images of said fifth set.

16. An apparatus for processing a sequence of images comprising:

a parameter adapting unit configured and adapted for adapting a processing parameter with regard to one or more visually perceptible image parameters of one or more sets of said images to obtain an adapted processing parameter; and
a processing unit configured and adapted for processing a set of one or more of said images including a current image, said processing including a processing step based on said adapted processing parameter.

17. The apparatus of item 16, wherein said one or more visually perceptible image parameters includes one or more average picture levels obtained from a respective set of one or more of said images.

18. The apparatus of item 16 or 17, wherein said parameter adapting unit comprises a temporally recursive filter configured and adapted for adapting said processing parameter with regard to said one or more visually perceptible image parameters to obtain said adapted processing parameter.

19. The apparatus of item 18, wherein said adapting of said processing parameter comprises adapting a controlling coefficient of said temporally recursive filter based on a difference between a first average picture level determined from a first set of said images and a second average picture level determined from a second set of said images distinct from said first set..

20. The apparatus of item 19, wherein said parameter adapting unit comprises a look-up table and is configured and adapted to employ said look-up table for choosing said controlling coefficient on the basis of said difference between said first average picture level and said second average picture level.

21. The apparatus of item 19 or 20, wherein all images of said first set are previous to said current image in said sequence and all images of said second set are previous and not adjacent to said current image in said sequence.

22. The apparatus of any of items 16 to 21, wherein said parameter adapting unit comprises a coring filter configured and adapted for adapting said processing parameter with regard to said one or more visually perceptible image parameters to obtain said adapted processing parameter.

23. The apparatus of item 22, wherein said adapting of said processing parameter comprises applying, as a controlling input of said coring filtering, a difference between a third average picture level determined from a third set of said images and a fourth average picture level determined from a fourth set of said images distinct from said third set.

24. The apparatus of item 22 or 23, wherein all images of said third set are previous to said current image in said sequence and all images of said fourth set are previous and not adjacent to said current image in said sequence.

25. The apparatus of any of items 16 to 24, wherein said processing unit comprises a histogram equalization unit configured and adapted for effecting histogram equalization based on said adapted processing parameter.

26. The apparatus of any of items 16 to 25, wherein said processing unit comprises a pedestal processing unit configured and adapted for effecting pedestal processing based on said adapted processing parameter.

27. The apparatus of item 26, wherein said processing parameter to be adapted for employment by said histogram equalization comprises a mapping curve that is calculated from one or more histograms that have been subjected to frequency domain low pass filtering, recursive low pass filtering, cascaded low pass filtering, zero-phase forward and backward low pass filtering or average picture level adaptation.

28. The apparatus of item 25 or 27, wherein said processing parameter comprises any one of:

- a cumulative distribution function determined from one or more of said images,
- a histogram of an image, in particular a histogram of said current image,
- a histogram equalization curve, in particular a histogram equalization curve associated with said current image,
- a degree to which processed image data is to be mixed to unprocessed image data, or
- pixels associated with one or more of said images.

29. The apparatus of item 27, wherein said processing parameter comprises a degree of change to an image black level.

30. The apparatus of any of items 16-29, wherein said processing parameter comprises a difference between a fifth average picture level determined from a fifth set of said images and a sixth average picture level determined from pre-processed versions of the images of said fifth set.

31. A computer program product, comprising computer program means for carrying out the method steps of any of claims 1-15 when executed on a computer, digital signal processor or the like.

## Claims

1. A method of processing a sequence of images comprising the steps of:

   applying a temporally recursive filter (32A) to a processing parameter to obtain an adapted processing parameter; and
   processing a first set of said images including a current image, said processing including a processing step based on said adapted processing parameter; wherein
   a controlling coefficient of said temporally recursive filter is adapted based on a difference between a first average picture level determined from a second set of said images and a second average picture level determined from a third set of said images distinct from said second set.

2. The method of claim 1, wherein a look-up table is employed for choosing said controlling coefficient on the basis of said difference between said first average picture level and said second average picture level.

3. A method of processing a sequence of images comprising the steps of:

   applying a coring filter (32B) to a processing parameter to obtain an adapted processing parameter; and

processing a first set of said images including a current image, said processing including a processing step based on said processing parameter; wherein

a controlling input to said coring filter is a difference between a first average picture level determined from a second set of said images and a second average picture level determined from a third set of said images distinct from said second set.

4. The method of any of the preceding claims, wherein said processing step comprises histogram equalization.

5. The method of any of the preceding claims, wherein said processing step comprises pedestal processing.

6. The method of claim 4, wherein said processing parameter comprises any one of:

- a cumulative distribution function determined from one or more of said images,
- a histogram of an image, in particular a histogram of said current image,
- a histogram equalization curve, in particular a histogram equalization curve associated with said current image,
- a degree to which processed image data is to be mixed to unprocessed image data, or
- pixels associated with one or more of said images.

7. The method of claim 5, wherein said processing parameter comprises a degree of change to an image black level.

8. The method of any of the preceding claims, wherein said processing parameter comprises a difference between a third average picture level determined from a fourth set of said images and a fourth average picture level determined from pre-processed versions of the images of said fourth set.

9. The method of any of the preceding claims, wherein all images of said second set are previous to said current image in said sequence and all images of said third set are previous and not adjacent to said current image in said sequence.

10. An apparatus for processing a sequence of images comprising:

a temporally recursive filter (32A) configured and adapted for adapting a processing parameter to obtain an adapted processing parameter; and
a processing unit (31) configured and adapted for processing a first set of said images including a current image, said processing including a processing step based on said adapted processing parameter; wherein
a controlling coefficient of said temporally recursive filter is adapted based on a difference between a first average picture level determined from a second set of said images and a second average picture level determined from a third set of said images distinct from said second set.

11. The apparatus of claim 10, comprising a look-up table (36) and configured and adapted to employ said look-up table for choosing said controlling coefficient on the basis of said difference between said first average picture level and said second average picture level.

12. An apparatus for processing a sequence of images comprising:

a coring filter (32B) configured and adapted for adapting a processing parameter to obtain an adapted processing parameter; and
a processing unit (31) configured and adapted for processing a first set of said images including a current image, said processing including a processing step based on said adapted processing parameter; wherein
a controlling input of said coring filter is adapted based on a difference between a first average picture level determined from a second set of said images and a second average picture level determined from a third set of said images distinct from said second set.

13. The apparatus of any of claims 10 to 12, wherein said processing unit comprises a histogram equalization unit (41) configured and adapted for effecting histogram equalization based on said adapted processing parameter.

14. The apparatus of any of claim 10 to 13, wherein said processing unit comprises a pedestal processing unit (49) configured and adapted for effecting pedestal processing based on said adapted processing parameter.

**15.** The apparatus of claim 13, wherein said processing parameter comprises any one of:

- a cumulative distribution function determined from one or more of said images,
- a histogram of an image, in particular a histogram of said current image,
- a histogram equalization curve, in particular a histogram equalization curve associated with said current image,
- a degree to which processed image data is to be mixed to unprocessed image data, or
- pixels associated with one or more of said images.

**16.** The apparatus of claim 14, wherein said processing parameter comprises a degree of change to an image black level.

**17.** The apparatus of any of claims 10-16, wherein said processing parameter comprises a difference between a third average picture level determined from a fourth set of said images and a fourth average picture level determined from pre-processed versions of the images of said fourth set.

**18.** The apparatus of any of claims 10-17, wherein all images of said second set are previous to said current image in said sequence and all images of said third set are previous and not adjacent to said current image in said sequence.

**19.** A computer program product, comprising computer program means for carrying out the method steps of any of claims 1-15 when executed on a computer, digital signal processor or the like.

Fig. 1 - PRIOR ART

Fig. 2A - PRIOR ART

FIG. 2B - PRIOR ART

FIG. 2C

Fig. 3A

Fig. 3B

Fig. 4A

Fig. 4B

**European Patent Office**

## EUROPEAN SEARCH REPORT

Application Number

EP 03 01 2380

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 111 578 A (MATSUSHITA ELECTRIC INDUSTRIAL) 27 June 2001 (2001-06-27) | 1,9,19 | H04N5/14 |
| A | * page 11, line 40 - line 44 * <br> * page 12, line 40 - page 13, line 41 * <br> --- | 2,5 | |
| A | EP 0 501 728 A (MATSUSHITA ELECTRIC INDUSTRIAL) 2 September 1992 (1992-09-02) <br><br> * the whole document * <br> ----- | 1,3-7, 10, 12-16,19 | |

TECHNICAL FIELDS
SEARCHED (Int.Cl.7)

H04N

The present search report has been drawn up for all claims

| Place of search | Date of completion of the search | Examiner |
|---|---|---|
| THE HAGUE | 15 December 2003 | Berwitz, P |

## ANNEX TO THE EUROPEAN SEARCH REPORT
## ON EUROPEAN PATENT APPLICATION NO.

EP 03 01 2380

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2003

| Patent document cited in search report | | Publication date | Patent family member(s) | | Publication date |
|---|---|---|---|---|---|
| EP 1111578 | A | 27-06-2001 | JP | 3340703 B2 | 05-11-2002 |
| | | | JP | 2001027889 A | 30-01-2001 |
| | | | JP | 3215388 B2 | 02-10-2001 |
| | | | JP | 2001027890 A | 30-01-2001 |
| | | | CA | 2336803 A1 | 16-11-2000 |
| | | | EP | 1111578 A1 | 27-06-2001 |
| | | | CN | 1304522 T | 18-07-2001 |
| | | | WO | 0068926 A1 | 16-11-2000 |
| | | | JP | 3215399 B1 | 02-10-2001 |
| | | | JP | 2002055664 A | 20-02-2002 |
| | | | JP | 3215400 B1 | 02-10-2001 |
| | | | JP | 2002041007 A | 08-02-2002 |
| | | | JP | 3340733 B2 | 05-11-2002 |
| | | | JP | 2002258822 A | 11-09-2002 |
| | | | JP | 3340734 B2 | 05-11-2002 |
| | | | JP | 2002258823 A | 11-09-2002 |
| | | | JP | 3340735 B2 | 05-11-2002 |
| | | | JP | 2002311925 A | 25-10-2002 |
| EP 501728 | A | 02-09-1992 | JP | 4271669 A | 28-09-1992 |
| | | | AU | 640858 B2 | 02-09-1993 |
| | | | AU | 1115592 A | 10-09-1992 |
| | | | CA | 2061893 A1 | 28-08-1992 |
| | | | CN | 1064578 A ,B | 16-09-1992 |
| | | | DE | 69225263 D1 | 04-06-1998 |
| | | | DE | 69225263 T2 | 03-09-1998 |
| | | | EP | 0501728 A2 | 02-09-1992 |
| | | | KR | 9506237 B1 | 12-06-1995 |
| | | | US | 5239378 A | 24-08-1993 |

EPO FORM P0459

For more details about this annex : see Official Journal of the European Patent Office, No. 12/82